# EUROPÄISCHE PATENTSCHRIFT

(11) **EP 3 525 193 B1**
(45) Veröffentlichungstag und Bekanntmachung des Hinweises auf die Patenterteilung: **01.09.2021**
(21) Anmeldenummer: 19154023.6
(22) Anmeldetag: 28.01.2019
(51) Int. Cl.: G08G 1/16, G08G 1/0967

(54) **VERFAHREN UND EINE VORRICHTUNG ZUR DEZENTRALEN KOOPERATIONSABSTIMMUNG VON FAHRZEUGEN**
METHOD AND DEVICE FOR DECENTRALISED COOPERATION COORDINATION BETWEEN VEHICLES
PROCÉDÉ ET DISPOSITIF DE COORDINATION DÉCENTRALISÉE DE COOPÉRATION DE VÉHICULES

(30) Priorität: 02.02.2018 DE 102018201646
(43) Veröffentlichungstag der Anmeldung: 14.08.2019
(73) Patentinhaber: Continental Teves AG & Co. OHG, 60488 Frankfurt am Main (DE)
(72) Erfinder: Strunck, Sebastian, 90411 Nürnberg (DE); Grotendorst, Thomas, 90411 Nürnberg (DE); Schönichen, Jonas, 90411 Nürnberg (DE)
(74) Vertreter: Continental Corporation

(56) Entgegenhaltungen:
- DE-A1-102015 219 469
- DE-A1-102016 205 142

## Beschreibung

Die vorliegende Erfindung betrifft ein Verfahren und eine Vorrichtung zur dezentralen Kooperationsabstimmung.

Die Offenlegungsschrift WO 2017076593 A1 offenbart ein Verfahren zum dezentralen Abstimmen von Fahrmanövern von Kraftfahrzeugen, wobei eine Plan- und die Wunschtrajektorie eines Kraftfahrzeugs an andere Kraftfahrzeuge im Umfeld übermittelt wird. Die anderen Kraftfahrzeuge prüfen die empfangenen Plan- und Wunschtrajektorien dahingehend, ob sie mit der eigenen Solltrajektorie kollidieren und ob ein Anpassen der eigenen Solltrajektorie vorteilhaft wäre. Ist ein Anpassen vorteilhaft, so wird die Solltrajektorie angepasst und das Fahrverhalten entsprechend geändert. Das ursprünglich aussendende Kraftfahrzeug empfängt seinerseits Plan- und Wunschtrajektorien der anderen Kraftfahrzeuge und passt seine Solltrajektorie ebenfalls an, wenn dies nötig und vorteilhaft ist. Dies ermöglicht eine komplexe Bewertung der möglichen Anpassung des Fahrverhaltens des Kraftfahrzeugs.

Die DE 10 2016 205 142 A1 betrifft ein Verfahren zum Initiieren eines kooperativen Fahrmanövers durch Bereitstellen einer Fahrintentionsnachricht für Fahrzeuge in einer Umgebung eines Fahrzeugs, wobei die Fahrintentionsnachricht Information über eine Intention eines Fahrers oder eines zumindest teilautomatischen Fahrzeugsteuersystems des Fahrzeugs, ein Fahrmanöver durchzuführen, umfasst.

Nachteilig bei diesem Stand der Technik ist, dass die Kanalkapazitäten der Fahrzeug-zu-X Kommunikation für die zu kommunizierenden Datenmengen voraussichtlich erheblich ausgelastet beziehungsweise nicht ausreichend sein werden.

Aufgabe der Erfindung ist es daher ein Verfahren und eine Vorrichtung zur dezentralen Kooperationsabstimmung mit verbesserter Ressourcenausnutzung zu schaffen.

Diese Aufgabe wird durch die Gegenstände der unabhängigen Ansprüche gelöst. Vorteilhafte Ausgestaltungen können beispielsweise den Unteransprüchen entnommen werden. Der Inhalt der Ansprüche wird durch ausdrückliche Inbezugnahme zum Inhalt der Beschreibung gemacht.

Es wird ein Verfahren zur dezentralen Kooperationsabstimmung von mindestens zwei Fahrzeugen gemäß dem Anspruch 1 zur Verfügung gestellt. Es wird auch eine Vorrichtung gemäß dem Anspruch 15 zur Verfügung gestellt. Weitere Ausführungsformen werden gemäß den abhängigen Ansprüchen zur Verfügung gestellt.

Der zugrundeliegende Gedanke ist, dass für eine kooperative Abstimmung zwischen Fahrzeugen die eigene Solltrajektorie anhand festgelegter abstrahierter Fahrmanöver in Form von Fahrmanöverinformationen zur Beschreibung der auszuführenden Fahrmanöver anderen Fahrzeugen mittels Fahrzeug-zu-X Kommunikation mitgeteilt wird. Ein abstrahiertes Fahrmanöver dient hierbei insbesondere zur Beschreibung eines möglichst grundlegenden Fahrmanövers eines Fahrzeugs. Ein Fahrzeug im Sinne der Erfindung ist insbesondere ein Land-, Wasser- und/oder Luftfahrzeug, beispielsweise ein Auto, Motorrad, Schiff, Boot oder Flugzeug. Eine Solltrajektorie im Sinne der Erfindung soll eine Trajektorie bezeichnen, welche fahrstreifengenau ist und die aktuell geplante Fahrtrajektorie beschreibt. Fahrstreifengenauigkeit beschreibt insbesondere eine Bezogenheit auf einen jeweiligen befahrenden Fahrstreifen einer Fahrbahn, in der Weise, dass auch Krümmungen des Fahrstreifens im Fahrverlauf durch eine fahrstreifengenaue (Soll-)Trajektorie Berücksichtigung finden können.

Unter einem Sollfahrmanöver im Sinne der Erfindung sei ein für einen definierten Zeitpunkt bzw. -raum und eine definierte Position bzw. Fläche vorgesehenes Fahrmanöver verstanden. Im Gegensatz zur Beschreibung mittels Trajektorien bezieht sich ein Fahrmanöver auf einen definierten Zeitpunkt bzw. -raum und eine definierte Position bzw. Fläche, ohne dabei jedem beliebigen geographischen Punkt auf einer Strecke eine Zeit zuzuordnen.

Eine Trajektorie soll im Folgenden eine mögliche Fahrstrecke bezeichnen. Die Trajektorie beschreibt mathematisch eine geographische Strecke. Jedem beliebigen geographischen Punkt auf dieser Strecke kann eine Zeit zugeordnet werden, welche angibt, wann das Kraftfahrzeug diesen Punkt passieren kann. Wenn eine solche Trajektorie das geplante Manöver eines Fahrzeug darstellt, dann erlaubt es zu prädizieren, an welcher Position sich dieses Fahrzeug zu einem bestimmten Zeitpunkt befinden wird.

Unter einem abstrakten Fahrmanöver im Sinne der Erfindung sei eine abstrahierte Repräsentanz zur Realisierung von zumindest einer auszuführenden Handlungsanweisung verstanden. Handlungsanweisungen in diesem Sinne sind beispielsweise Veränderung der Fahrdynamik eines Fahrzeugs. Die Darstellung in Fahrmanövern ermöglicht somit eine wesentliche Schonung von Ressourcen.

Unter einem Konflikt der Solltrajektorie und/oder des Sollfahrmanövers des ersten Fahrzeugs und der Solltrajektorie und/oder des Sollfahrmanövers des weiteren Fahrzeugs wird insbesondere ein räumliches und zeitliches Treffen der geplanten Fahrverläufe bzw. Fahrmanöver verstanden. Mit anderen Worten, wenn es im weiteren Verlauf der Bewegung der betreffenden Fahrzeuge zu einer zumindest teilweisen Überlappung (Kollision) der Fahrzeuge und/oder vorgegebener Sicherheitsbereiche um die Fahrzeuge kommen würde.

Entsprechend einer Ausführungsform wird zum Ermitteln der Fahrmanöverinformationen eine Konkretisierung des zumindest einen ermittelten abstrakten Fahrmanövers im Hinblick auf die jeweilige Situation vorgenommen. Beispielsweise erfolgt dies durch Anreichern mit für die betreffende Situation anzuwendenden Fahrdynamikänderungs- bzw. -absolutwerten. Dieser Vorgang kann in der computerimplementierten Realisierung beispielsweise durch Instanziierung eines Objekts (konkretisiertes Fahrmanöver) aus einer Klasse (abstrahiertes Fahrmanöver) erfolgen bzw. hierdurch veranschaulicht werden. Beispielsweise werden im Falle des Abbiegens eine explizite Kurvenkrümmung oder ein Winkel und die zu fahrende Geschwindigkeit festgelegt. Auch die Fahrmanöverinformationen weisen zweckmäßigerweise einen Abstraktionsgrad auf. Zum Beispiel kann ein weiteres Fahrzeug auf Basis detaillierter Fahrzeugkomponentenanweisungen, wie beispielsweise zum Erhöhen des Bremsdrucks um einen gewissen Betrag, lediglich dann eine Solltrajektorie bzw. Sollfahrmanöver des ersten Fahrzeugs rekonstruieren, wenn umfassendere Informationen zum Zustand des Fahrzeugs übermittelt werden. Der Abstraktionsgrad dient demnach insbesondere der optimalen Ausnutzung der Kanalkapazitäten der Fahrzeug-zu-X Kommunikation. Grundgedanke der übertragenen Fahrmanöverinformation ist daher eine konkrete Rekonstruktion der Solltrajektorie/Sollfahrmanövers anhand der übertragen Informationen des betreffenden Fahrmanövers bei möglichst geringen Datenmengen zu erzielen. Durch die somit vergleichsweise geringe auszutauschende Datenmenge können in erheblichem Umfang Kanalkapazitäten der Fahrzeug-zu-X Kommunikation sowie Ressourcen der Fahrzeuge als solches eingespart werden.

Grundsätzlich können die Fahrmanöver automatisiert oder manuell ausgeführt werden, wobei bei manueller Ausführung, dem Fahrer eine Fahrmanöverliste als Fahranweisung ausgebbar vorgesehen sein kann.

Zweckmäßigerweise wird die Kooperationsanfrage bzw. die den Konflikt anzeigende Information in Form einer Fahrzeug-zu-X Nachricht ausgesandt, wobei diese zumindest eine entsprechend gekennzeichnete Fahrmanöverinformation umfassen können. Weiterhin kann ein das betreffende Fahrzeug identifizierender Identifikator umfasst sein.

Durch das erste Fahrzeug erfolgt gemäß einer Ausführungsform, vor dem Ermitteln zumindest eines abstrakten Fahrmanövers zur Realisierung zumindest eines Sollfahrmanövers, ein Ermitteln einer Solltrajektorie des ersten Fahrzeugs.

Sofern ein Konflikt der Solltrajektorie und/oder des Sollfahrmanövers des ersten Fahrzeugs und der Solltrajektorie und/oder des Sollfahrmanövers des weiteren Fahrzeugs vorliegt, nimmt das erste Fahrzeug und/oder das weitere Fahrzeug gemäß einer Ausführungsform des Verfahrens Berechnungen hinsichtlich zumindest einer möglichen Anpassungsoption der Solltrajektorie und/oder des Sollfahrmanövers vor.

Weiterbildungsgemäß erfolgt die Berechnung durch das die Kooperationsanfrage und/oder den Konflikt anzeigenden Information empfangende Fahrzeug.

Entsprechend einer Ausführungsform nimmt das die Kooperationsanfrage und/oder den Konflikt anzeigenden Information empfangende Fahrzeug eine Prüfung dahingehend vor, ob eine Kooperation mit dem weiteren Fahrzeug unterstützt werden soll. Die Prüfung kann hierbei automatisiert und/oder mit manueller Unterstützung vorgenommen werden.

Soll eine Kooperation mit dem weiteren Fahrzeug unterstützt werden übermittelt das erste Fahrzeug entsprechend einer Ausführungsform angepasste Fahrmanöverinformationen auf Basis einer Ermittlung zumindest eines abstrakten Fahrmanövers zur Realisierung zumindest eines angepassten Sollfahrmanövers.

Entsprechend einer weiteren Ausführungsform führt das weitere Fahrzeug nach Empfang der angepassten Fahrmanöverinformationen die Solltrajektorie und/oder das Sollfahrmanöver oder eine an die angepassten Fahrmanöverinformationen angepasste Solltrajektorie und/oder ein angepasstes Sollfahrmanöver aus. Somit findet eine dezentrale Abstimmung auszuführender Fahrmanöver der betreffenden Fahrzeuge statt.

Erfindungsgemäß wird zur Ermittlung zumindest eines abstrakten Fahrmanövers eine Auswahl zumindest eines abstrakten Fahrmanövers aus einer Aufstellung unterschiedlicher abstrakter Fahrmanöver vorgenommen.

Erfindungsgemäß wird aus der Auswahl der Fahrmanöver eine Abfolge in der Reihenfolge der Ausführung erstellt. Die Abfolge kann insbesondere bei dem Schritt der Auswahl Berücksichtigung finden, in der Weise, dass die Fahrmanöver anhand ihrer auszuführenden Reihenfolge ausgewählt werden.

Erfindungsgemäß ist die Aufstellung unterschiedlicher Fahrmanöver in einem Datenspeicher vorgesehen. Der Datenspeicher kann hierbei als fahrzeuginterner und/oder als fahrzeugexterner Datenspeicher vorliegen.

Erfindungsgemäß wird eine zusammengefasste Aufstellung von Fahrmanöverinformationen einer Mehrzahl auszuführender Fahrmanöver von dem ersten Fahrzeug an das weitere Fahrzeug übermittelt. Die Auswahl erfolgt einer Weiterbildung gemäß entsprechend einer Abfolge der Fahrmanöver.

Entsprechend einer Ausführungsform kann grundsätzlich eine Unterscheidung der abstrakten Fahrmanöver in Längs- und Quermanöver vorgesehen sein. Insbesondere kann eine Überlagerung kombinierter abstrakter Fahrmanöver, z.B. Längs- und Quermanöver, erfolgen.

Die abstrakten Fahrmanöver können einer Ausführungsform gemäß in die Kategorien Quer-, Längs- und/oder weitere Fahrmanöver eingeteilt werden.

Als abstrakte Fahrmanöver können unter anderem angesehen werden:
- Fahrstreifenfolgefahrt,
- Geschwindigkeit halten,
- Verzögerung,
- Beschleunigung,
- Spurwechsel,
- Abbiegen (links, rechts),
- Stillstand (Stehen oder Parken),
- Ein- oder Ausparken und/oder
- Kolonnenfahrt einleiten, beibehalten bzw. auflösen.

Die Fahrstreifenfolgefahrt beschreibt hierbei eine einem Fahrstreifen einer Fahrbahn folgende bzw. auf diesen bezogene (Soll-)trajektorie, insbesondere ungeachtet einer möglichen Krümmung des Fahrstreifens bzw. der Fahrbahn.

Gemäß einer Ausführungsform können Kombinationen von abstrakten Fahrmanövern vorgesehen sein, welche zeitlich und/oder räumlich überlagert oder hintereinander auszuführen sind. Beispielsweise kommt hier eine gleichzeitig Ausführung eines Quermanövers, wie z.B. ein Spurwechsel, mit einem Längsmanöver, z.B. Beschleunigung, in Betracht.

Weitere Beispiele sind:
Längsmanöver: Verzögerung in Verbindung mit Beschleunigung;
Quermanöver: Spurwechsel in Verbindung mit Geradeausfahrt in Verbindung mit Abbiegen.

Weiterhin können einer Ausführung gemäß Kombinationen abstrakter Fahrmanöver als Definition eines abstrakten Fahrmanövers vorgesehen sein.

Entsprechend einer Ausführungsform werden als Fahrmanöverinformationen die Art eines Fahrmanövers, die Position des Beginns des Fahrmanövers, die Zeit des Beginns des Fahrmanövers und/oder die zeitliche bzw. örtliche Länge des Fahrmanövers ausgesandt.

Die übermittelten Positionen liegen einer Ausführungsform gemäß in Form von Koordinaten eines globalen Satellitennavigationssystems vor. Insbesondere während einer Kooperationsabstimmung kann auch vorgesehen sein relative Koordinaten in Bezug auf das betreffende weitere Fahrzeug zu verwenden.

Gemäß einer weiteren Ausführungsform ist vorgesehen, dass insbesondere bei Vorliegen mehrerer Fahrstreifen einer befahrbaren Fahrbahn die Fahrmanöverinformationen eine Information zur Bestimmung eines befahrenen Fahrstreifens einer Fahrbahn umfassen.

Weiterbildungsgemäß kann dabei eine Anordnung des von dem Fahrzeug befahrenen Fahrstreifens relativ zu weiteren Fahrstreifen der Fahrbahn als diesbezüglich zu übertragene Information herangezogen werden. Dadurch kann die Position des Fahrzeugs fahrstreifengenau berücksichtigt werden, was insbesondere für Situationen relevant sein kann, in denen situationsbezogen keine ausreichend genaue Position berechenbar ist oder kein Bedarf dazu besteht. Weiterhin könnte durch die fahrstreifengenaue Auflösung zumindest auf eine Koordinatenangabe verzichtet werden. Dadurch können Fehler aufgrund abweichender Koordinatensysteme der Fahrzeuge begrenzt werden.

Entsprechend einer Ausführungsform werden im Falle einer Fahrstreifenfolgefahrt des ersten Fahrzeugs und/oder des weiteren Fahrzeugs keine Fahrmanöverinformationen ausgesandt. Hierbei wird davon ausgegangen, dass eine Information bezüglich einer Geradeausfahrt bzw. der Plantrajektorie für ein empfangendes weiteres Fahrzeug anhand des zumindest einen Identifikators und einer eine Position umfassenden Mitteilung, wie z.B. "Cooperative Awareness Message" CAM-Nachricht (Europa) und "Basic Safety Message" BSM-Nachricht (USA), bereits ermittelbar ist. Es sei erwähnt, dass alternativ vorgesehen sein kann auch bei Geradeausfahrt eine Fahrmanöverinformation auszusenden. Dadurch wird ermöglicht, dass zur Kooperation bereite Fahrzeuge anderen Fahrzeugen bekannt sind.

Entsprechend einer Ausführungsform werden gleiche Fahrmanöverinformationen wiederholt ausgesandt. Dies ermöglicht Fahrzeugen, die nach einer ersten Aussendung einer Fahrmanöverinformation in Kommunikationsreichweite gekommen sind, ebenfalls über das geplante Manöver Kenntnis zu erlangen und ermöglicht darüber hinaus das Kompensieren von eventuellen Datenverlusten bei der Kommunikation.

Entsprechend einer Ausführungsform werden im Falle eines sich nach einer ersten Aussendung von Fahrmanöverinformationen ändernden geplanten Fahrmanövers, das geänderte geplante Fahrmanöver betreffende Fahrmanöverinformationen ausgesandt. In Ergänzung kann vorgesehen sein, eine auf den Abbruch bzw. die Nichteinleitung des betreffenden Fahrmanövers gerichtete Fahrmanöverinformation auszusenden. Dies kann insbesondere im Falle der Geradeausfahrt anstelle des ursprünglich geplanten Fahrmanövers vorgesehen sein, damit die weiteren Fahrzeuge Klarheit über die Planung des aussenden Fahrzeugs haben.

Entsprechend einer Ausführungsform werden die Fahrmanöverinformationen in wenigstens einen bereits bestehenden üblicherweise wiederholt ausgesendeten Nachrichtentyp eingebettet, wie beispielsweise der CAM oder der BSM. Dadurch wird eine erhebliche zusätzliche Belastung der Ressourcen vermieden. In Ergänzung oder alternativ dazu werden die Fahrmanöverinformationen mittels insbesondere ausschließlich für diesen Zweck vorgesehener Nachrichtentypen übermittelt.

Entsprechend einer Ausführungsform ist vorgesehen, eine Information über einen Kooperationsstatus und/oder dessen Änderung in Form zumindest eines Statusindikators auszusenden. Dies können sogenannte Statusindikatoren bzw. "Flags" sein, welche in besonders ressourcenschonender Weise übertragbar sind, da beispielsweise ein einzelnes Bit zur Anzeige eines Status als solches ausreichend sein kann. Sender und Empfänger sollten also über ein einheitliches Verständnis der Statusinformation verfügen, also welcher Status durch eine entsprechende Statusinformation definiert wird. Entsprechend kann neben der eigentlichen Statusinformation zumindest eine weitere Information für die Zuordnung vorgesehen sein.

### Beispiele für Status sind:

Kooperationsgesuch: Insbesondere wenn ein geplantes Fahrmanöver des ersten Fahrzeugs mit der ermittelten Trajektorie zumindest eines weiteren Fahrzeugs konfliktbehaftet ist, könnte von einem der beteiligten Fahrzeuge somit eine Kooperation zur Auflösung angeregt werden.

Bestätigung: Ein von dem ersten Fahrzeug angefragtes weiteres Fahrzeug passt die eigene Trajektorie unter Berücksichtigung der Trajektorie des ersten Fahrzeugs an und bestätigt durch Übertragung einer entsprechenden Statusinformation.

Gemäß einer Ausführungsform werden im Falle eines Konflikts der Solltrajektorie und/oder des Sollfahrmanövers des ersten Fahrzeugs und der Solltrajektorie und/oder des Sollfahrmanövers des weiteren Fahrzeugs entsprechend geltende Straßenverkehrsregeln für eine Auflösung des Konflikts zugrunde gelegt. Dies erfolgt insbesondere im Falle kollidierender Manöverpläne des Fahrzeugs und des zumindest eines weiteren Fahrzeugs. Diese Grundannahme ist besonders für die Auflösung des Konflikts von Vorteil. Dadurch kann beispielsweise ein weiteres Fahrzeug, welches zur Kooperation angefragt wird, davon ausgehen, dass es einen regelkonformen Rückfallplan gibt, sodass grundsätzlich die Option der Ablehnung einer Kooperation bzw. nicht Anpassen des eigenen Manöverplans besteht.

Aus geltenden Straßenverkehrsregeln, z.B. StVO, ergibt sich das üblicherweise bevorrechtigte Fahrzeug in einer bestimmten Verkehrssituation. Aufgetretene Konflikte der Solltrajektorien können somit zum Beispiel auch durch Ablehnen einer Kooperationsanfrage aufgelöst werden, wenn ein sich daraus ergebendes Vorrecht beispielsweise uneingeschränkt in Anspruch genommen werden soll.

Ferner wird eine Vorrichtung in einem ersten Fahrzeug zur dezentralen Kooperationsabstimmung mit mindestens einem weiteren Fahrzeug, umfassend:
- eine Manöverplanungseinrichtung zum Ermitteln zumindest eines abstrakten Fahrmanövers zur Realisierung zumindest eines Sollfahrmanövers, wobei die Manöverplanungseinrichtung weiterhin zum Ermitteln von Fahrmanöverinformationen bezüglich des zumindest einen abstrakten Fahrmanövers ausgestaltet ist,
- eine Manöverabstimmungseinrichtung zum Übermitteln der Fahrmanöverinformationen an zumindest ein weiteres Fahrzeug über eine Fahrzeug-zu-X Schnittstelle, wobei die Manöverabstimmungseinrichtung ausgestaltet ist, Fahrmanöverinformationen des weiteren Fahrzeugs mittels der Fahrzeug-zu-X Schnittstelle zu empfangen und eine Solltrajektorie und/oder ein Sollfahrmanöver des weiteren Fahrzeugs auf Basis der empfangenen Fahrmanöverinformationen zu rekonstruieren und die rekonstruierte Solltrajektorie und/oder das rekonstruierte Sollfahrmanöver des weiteren Fahrzeugs mit einer Solltrajektorie und/oder einem Sollfahrmanöver des ersten Fahrzeugs zu vergleichen und, sofern eine Konflikt der Solltrajektorie und/oder des Sollfahrmanövers des ersten Fahrzeugs und der Solltrajektorie und/oder des Sollfahrmanövers des weiteren Fahrzeugs vorliegt, eine Kooperationsanfrage und/oder eine den Konflikt anzeigende Information an das erste Fahrzeug zu übermitteln, wobei
   zur Ermittlung zumindest eines abstrakten Fahrmanövers eine Auswahl zumindest eines abstrakten Fahrmanövers aus einer Aufstellung unterschiedlicher abstrakter Fahrmanöver aus einem Datenspeicher vorgenommen wird, wobei aus der Auswahl der Fahrmanöver eine Abfolge in der Reihenfolge der Ausführung erstellt wird, wobei eine zusammengefasste Aufstellung von Fahrmanöverinformationen einer Mehrzahl auszuführender Fahrmanöver von dem ersten Fahrzeug an das weitere Fahrzeug übermittelt wird.

Gemäß einem weiteren Aspekt der Erfindung ist die Vorrichtung eingerichtet, ein Verfahren nach wenigstens einem der vorstehenden Ausführungsformen durchzuführen.

In einer Weiterbildung der angegebenen Vorrichtung weist die angegebene Vorrichtung einen Speicher und einen Prozessor auf. Dabei ist das angegebene Verfahren in Form eines Computerprogramms in dem Speicher hinterlegt und der Prozessor zur Ausführung des Verfahrens vorgesehen, wenn das Computerprogramm aus dem Speicher in den Prozessor geladen ist.

Gemäß einem weiteren Aspekt umfasst das Computerprogramm Programmcodemittel, um alle Schritte eines der angegebenen Verfahren durchzuführen, wenn das Computerprogramm auf einem Computer oder einer der angegebenen Vorrichtungen ausgeführt wird.

Gemäß einem weiteren Aspekt der Erfindung enthält das Computerprogrammprodukt einen Programmcode, der auf einem computerlesbaren Datenträger gespeichert ist und der, wenn er auf einer Datenverarbeitungseinrichtung ausgeführt wird, eines der angegebenen Verfahren durchführt.

Einige besonders vorteilhafte Ausgestaltungen der Erfindung sind in den Unteransprüchen angegeben. Weitere bevorzugte Ausführungsformen ergeben sich auch aus der nachfolgenden Beschreibung von Ausführungsbeispielen an Hand von Figuren.

Es zeigen:
- Fig. 1: eine schematische Darstellung einer Verkehrssituation zur Erläuterung einer Ausführungsform des Verfahrens und
- Fig. 2: eine beispielhafte Vorgehensweise zur dezentralen Manöverabstimmung anhand der Verkehrssituation gemäß der Fig. 1.

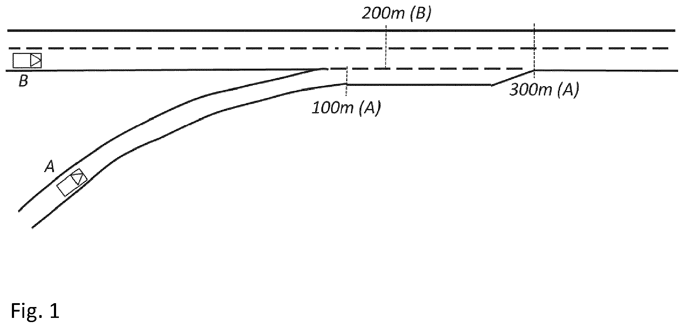

Fig. 1 zeigt eine schematische Darstellung einer Verkehrssituation bei der Auffahrt eines Fahrzeugs A auf eine Autobahn, auf der sich Fahrzeug B fortbewegt. Zwischen den Fahrzeugen A und B wird daraufhin eine dezentrale Koordination zur Abstimmung der jeweiligen Fahrmanöver vorgenommen, mit dem Ziel die Solltrajektorien von Fahrzeug A und Fahrzeug B für das Einfädelungsmanöver des Fahrzeugs A konfliktfrei zu realisieren.

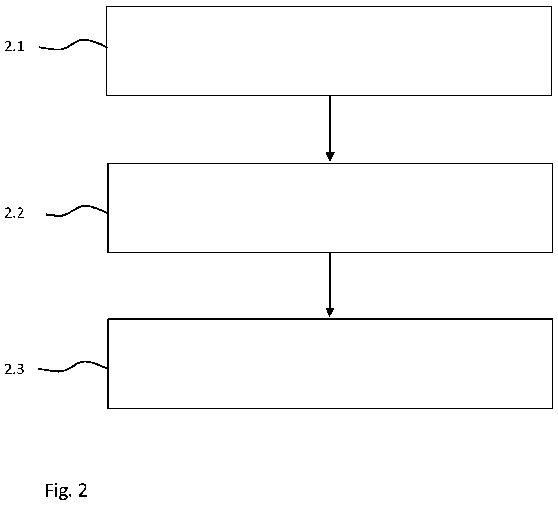

Anhand von Fig. 2 wird nachfolgend eine beispielhafte Vorgehensweise zur dezentralen Fahrmanöverabstimmung zwischen Fahrzeug A und Fahrzeug B beschrieben, welche sich auf die Verkehrssituation gemäß Fig. 1 bezieht. Die aufgezeigten übertragenen abstrakten Fahrmanöverinformationen sind dabei in beispielhafter deskriptiver Art, wobei auch lediglich die Informationen angegeben sind, welche für die Erläuterung der Vorgehensweise als zweckmäßig angesehen werden. Die genannten Distanzangaben orientieren sich dabei an den in Fig. 1 dargestellten Abständen, deren Fahrzeugzuordnung in Klammern angegeben ist.

In Schritt 2.1 sendet Fahrzeug A aktuelle Fahrmanöverinformationen in Verbindung mit Positionsinformationen Pos. mittels Fahrzeug-zu-X Kommunikation aus. Die ausgesandten Informationen umfassen weiterhin einen Identifikator ID des betreffenden Fahrzeugs, welcher bei Bedarf ein direktes Ansprechen für eine Fahrmanöverkoordinierung ermöglicht:
< ID: A | Pos. A | Fahrstreifen folgen mit 16m/s >

Fahrzeug B sendet ebenfalls Fahrmanöverinformation in Verbindung mit Positionsinformationen mittels Fahrzeug-zu-X Kommunikation aus:
< ID: B | Pos. B | Fahrstreifen folgen mit 33m/s >

Üblicherweise werden standardisierte Mitteilung wie beispielsweise "Cooperative Awareness Message" CAM-Nachricht (Europa) oder "Basic Safety Message" BSM-Nachricht (USA) periodisch ausgesandt, wobei diese ebenfalls zumindest Informationen zur Identifikation des Senders und Position umfassen anhand derer eine Trajektorie grundsätzlich reproduzierbar ist. Entsprechend kann auf das Übermitteln einer Nachricht im Falle der Geradeausfahrt verzichtet werden, insofern kein die Fahrdynamik des Fahrzeugs wesentlich verändernder Eingriff erfolgt. Die Solltrajektorie kann anhand der mittels der CAM- bzw. BSM-Nachricht übertragenen Daten dennoch ermittelt werden.

In Schritt 2.2 berechnet Fahrzeug A auf Basis der von Fahrzeug B empfangen Fahrmanöverinformationen die Solltrajektorie von Fahrzeug B, wobei durch Vergleich mit der eigenen Solltrajektorie eine Konfliktsituation festgestellt wird. Fahrzeug B ist in der vorliegenden Situation gemäß zugrunde gelegter Straßenverkehrsvorschriften bevorrechtigt, weshalb Fahrzeug A grundsätzlich die eigene Solltrajektorie anpassen müsste. Aufgrund dieser Bevorrechtigung von Fahrzeug B und der notwendigen Anpassung der Solltrajektorie kann es als Obliegenheit des Fahrzeugs A angesehen werden eine Kooperation herbeizuführen.

Mittels einer Kooperationsanfrage an Fahrzeug B versucht Fahrzeug A eine Anpassung der Solltrajektorie von Fahrzeug B zu erwirken, mit dem Ziel, dass die eigene Solltrajektorie unverändert oder möglichst wenig verändert beibehalten werden kann.

Beispielsgemäß versendet Fahrzeug A unter Heranziehung des Identifikators von Fahrzeug B die Kooperationsanfrage derart, dass neben den Fahrmanöverinformationen eine den Konflikt anzeigende Statusinformation übertragen wird.
< ID: A | Pos. A | in 100m: Spurwechselbeginn mit 20m/s | in 280m: Spurwechselende mit 27m/s | konfliktbehaftet mit B >

Entsprechend einer Ausführungsform kann vorgesehen sein, dass Fahrzeug A zusätzlich Fahrmanöverinformationen zu dem alternativ geplanten Fahrmanöver versendet, welches Fahrzeug A ausführt, falls Fahrzeug B die Kooperationsanfrage ablehnen würde.

In Schritt 2.3 empfängt Fahrzeug B die Kooperationsanfrage von Fahrzeug A und ermittelt anhand der Fahrmanöverinformationen mögliche Anpassungen der eigenen Solltrajektorie, z.B. Verzögern oder Spurwechsel. Als Kriterium hierfür kann eine Kostenfunktion zur Beschreibung der Fahrzeug B durch die in Frage kommenden Fahrmanöver entstehenden Kosten herangezogen werden. Diese sind dabei nicht notwendigerweise ausschließlich monetärer Art, bspw. Benzinverbrauch, Zeitverlust, Komfortverlust. Zu berücksichtigen ist, dass eine Abweichung von einer Geradeausfahrt üblicherweise höhere Kosten bereitet.

Fahrzeug B entscheidet, ob es die Absicht von A unterstützen möchte oder nicht. Dies kann manuell oder automatisiert erfolgen. Auf welcher Basis automatisiert ermittelt werden kann, ob eine Anfrage unterstützt werden sollte, ist Gegenstand aktueller Forschung und daher nicht Gegenstand der vorliegenden Anmeldung. Beispielsgemäß könnte ein monetärer Anreiz bzw. Kostenausleich geschaffen werden, wobei zu berücksichtigen ist, dass sich dies als entbehrlich darstellt, wenn sich im Gesamten ein beständiger Ausgleich ergibt.

Unterstützt Fahrzeug B die Kooperationsanfrage von Fahrzeug A, passt Fahrzeug B die Solltrajektorie an, verschickt die Fahrmanöverinformationen und führt ein entsprechendes Fahrmanöver aus. Zusätzlich kann B zugleich noch eine Bestätigung der Kooperation bspw. in Form einer Statusinformation bereitstellen:
< ID: B | Pos. B | in 5m: Fahrstreifen folgen mit Verzögerung von 1m/s2 | in 200m: Fahrstreifen folgen mit 27m/s | Bestätigung A>

Das Fahrzeug A empfängt die Informationen von Fahrzeug B, erkennt, dass das beabsichtigte Fahrmanöver ermöglicht wird und führt es entsprechend aus oder passt die eigene Solltrajektorie unter Berücksichtigung der bereitgestellten Fahrmanöverinformationen an. Die Fahrmanöverinformationen werden während der Ausführung des Manövers wiederholt ausgesandt, wodurch weitere Verkehrsteilnehmer darüber informiert sind bzw. werden.

Wird das Ersuchen von Fahrzeug A abgelehnt, kann beispielsweise vorgesehen sein, die bleibenden Fahrmanöverinformationen in Verbindung mit der Ablehnung zu versenden:
< ID: B | Pos. B | Fahrstreifen folgen mit 33m/s | Ablehnung A>

In diesem Fall empfängt das Fahrzeug A die Informationen von Fahrzeug B, erkennt anhand der Ablehnungsinformation, dass das beabsichtigte Fahrmanöver nicht ermöglicht wird und passt die Solltrajektorie an, wobei auch hierbei die Fahrmanöverinformationen während der Ausführung des Manövers wiederholt ausgesandt werden, um weitere Verkehrsteilnehmer darüber zu informieren.

Sofern sich im Laufe des Verfahrens herausstellt, dass ein Merkmal oder eine Gruppe von Merkmalen nicht zwingend nötig ist, so wird anmelderseitig bereits jetzt eine Formulierung zumindest eines unabhängigen Anspruchs angestrebt, welcher das Merkmal oder die Gruppe von Merkmalen nicht mehr aufweist. Hierbei kann es sich beispielsweise um eine Unterkombination eines am Anmeldetag vorliegenden Anspruchs oder um eine durch weitere Merkmale eingeschränkte Unterkombination eines am Anmeldetag vorliegenden Anspruchs handeln. Derartige neu zu formulierende Ansprüche oder Merkmalskombinationen sind als von der Offenbarung dieser Anmeldung mit abgedeckt zu verstehen.

Es sei ferner darauf hingewiesen, dass Ausgestaltungen, Merkmale und Varianten der Erfindung, welche in den verschiedenen Ausführungen oder Ausführungsbeispielen beschriebenen und/oder in den Figuren gezeigt sind, beliebig untereinander kombinierbar sind. Einzelne oder mehrere Merkmale sind beliebig gegeneinander austauschbar. Hieraus entstehende Merkmalskombinationen sind als von der Offenbarung dieser Anmeldung mit abgedeckt zu verstehen.

Rückbezüge in abhängigen Ansprüchen sind nicht als ein Verzicht auf die Erzielung eines selbständigen, gegenständlichen Schutzes für die Merkmale der rückbezogenen Unteransprüche zu verstehen. Diese Merkmale können auch beliebig mit anderen Merkmalen kombiniert werden.

Merkmale, die lediglich in der Beschreibung offenbart sind oder Merkmale, welche in der Beschreibung oder in einem Anspruch nur in Verbindung mit anderen Merkmalen offenbart sind, können grundsätzlich von eigenständiger erfindungswesentlicher Bedeutung sein. Sie können deshalb auch einzeln zur Abgrenzung vom Stand der Technik in Ansprüche aufgenommen werden.

Allgemein sei darauf hingewiesen, dass unter Fahrzeug-zu-X-Kommunikation insbesondere eine direkte Kommunikation zwischen Fahrzeugen und/oder zwischen Fahrzeugen und Infrastruktureinrichtungen verstanden wird. Beispielsweise kann es sich also um Fahrzeug-zu-Fahrzeug-Kommunikation oder um Fahrzeug-zu-Infrastruktur-Kommunikation handeln. Sofern im Rahmen dieser Anmeldung auf eine Kommunikation zwischen Fahrzeugen Bezug genommen wird, so kann diese grundsätzlich beispielsweise im Rahmen einer Fahrzeug-zu-Fahrzeug-Kommunikation erfolgen, welche typischerweise ohne Vermittlung durch ein Mobilfunknetz oder eine ähnliche externe Infrastruktur erfolgt und welche deshalb von anderen Lösungen, welche beispielsweise auf ein Mobilfunknetz aufbauen, abzugrenzen ist. Beispielsweise kann eine Fahrzeug-zu-X-Kommunikation unter Verwendung der Standards IEEE 802.11p oder IEEE 1609.4 erfolgen. Eine Fahrzeug-zu-X-Kommunikation kann auch als C2X-Kommunikation bezeichnet werden. Die Teilbereiche können als C2C (Car-to-Car) oder C2I (Car-to-Infrastructure) bezeichnet werden. Die Erfindung schließt jedoch Fahrzeug-zu-X-Kommunikation mit Vermittlung beispielsweise über ein Mobilfunknetz explizit nicht aus.

## Patentansprüche

1. Verfahren zur dezentralen Kooperationsabstimmung von mindestens zwei Fahrzeugen, umfassend die durch eine Vorrichtung in einem ersten Fahrzeug ausgeführten Schritte:
- Ermitteln zumindest eines abstrakten Fahrmanövers zur Realisierung zumindest eines Sollfahrmanövers durch das erste Fahrzeug, wobei ein abstraktes Fahrmanöver eine abstrahierte Repräsentanz zur Realisierung von zumindest einer auszuführenden Handlungsanweisung zur Beschreibung eines grundlegenden Fahrmanövers eines Fahrzeugs bezeichnet,
- Ermitteln von Fahrmanöverinformationen bezüglich des zumindest einen abstrakten Fahrmanövers durch das erste Fahrzeug,
- Übermitteln der Fahrmanöverinformationen an zumindest ein weiteres Fahrzeug mittels einer Fahrzeug-zu-X Schnittstelle des ersten Fahrzeugs,
- Empfangen der Fahrmanöverinformationen des ersten Fahrzeugs mittels einer Fahrzeug-zu-X Schnittstelle des weiteren Fahrzeugs,
- Rekonstruieren einer Solltrajektorie und/oder eines Sollfahrmanövers des ersten Fahrzeugs auf Basis der empfangenen Fahrmanöverinformationen durch das weitere Fahrzeug,
- Vergleichen der rekonstruierten Solltrajektorie und/oder des rekonstruierten Sollfahrmanövers des ersten Fahrzeugs mit einer Solltrajektorie und/oder einem Sollfahrmanöver des weiteren Fahrzeugs und, sofern ein Konflikt der Solltrajektorie und/oder des Sollfahrmanövers des ersten Fahrzeugs und der Solltrajektorie und/oder des Sollfahrmanövers des weiteren Fahrzeugs vorliegt,
- Übermitteln einer Kooperationsanfrage und/oder einer den Konflikt anzeigenden Information an das erste Fahrzeug, **dadurch gekennzeichnet, dass** zur Ermittlung des zumindest einen abstrakten Fahrmanövers eine Auswahl zumindest eines abstrakten Fahrmanövers aus einer Aufstellung unterschiedlicher abstrakter Fahrmanöver aus einem Datenspeicher vorgenommen wird, wobei aus der Auswahl der Fahrmanöver eine Abfolge in der Reihenfolge der Ausführung erstellt wird, wobei eine zusammengefasste Aufstellung von Fahrmanöverinformationen einer Mehrzahl auszuführender Fahrmanöver von dem ersten Fahrzeug an das weitere Fahrzeug übermittelt wird.

2. Verfahren gemäß Anspruch 1, wobei zum Ermitteln der Fahrmanöverinformationen eine Konkretisierung des zumindest einen ermittelten Fahrmanövers im Hinblick auf die jeweilige Situation vorgenommen wird.

3. Verfahren gemäß zumindest einem der vorhergehenden Ansprüche, wobei durch das erste Fahrzeug vor dem Ermitteln zumindest eines abstrakten Fahrmanövers zur Realisierung zumindest eines Sollfahrmanövers ein Ermitteln einer Solltrajektorie des ersten Fahrzeugs vorgenommen wird.

4. Verfahren gemäß zumindest einem der vorhergehenden Ansprüche, wobei das erste Fahrzeug und/oder das weitere Fahrzeug Berechnungen hinsichtlich zumindest einer möglichen Anpassungsoption der Solltrajektorie und/oder des Sollfahrmanövers vornimmt, sofern ein Konflikt der Solltrajektorie und/oder des Sollfahrmanövers des ersten Fahrzeugs und der Solltrajektorie und/oder des Sollfahrmanövers des weiteren Fahrzeugs vorliegt.

5. Verfahren gemäß zumindest einem der vorhergehenden Ansprüche, wobei das die Kooperationsanfrage und/oder den Konflikt anzeigenden Information empfangende erste Fahrzeug eine Prüfung dahingehend vornimmt, ob eine Kooperation mit dem weiteren Fahrzeug unterstützt werden soll.

6. Verfahren gemäß dem vorhergehenden Anspruch, wobei das erste Fahrzeug angepasste Fahrmanöverinformationen auf Basis einer Ermittlung zumindest eines abstrakten Fahrmanövers zur Realisierung zumindest eines angepassten Sollfahrmanövers übermittelt, wenn eine Kooperation mit dem weiteren Fahrzeug unterstützt werden soll.

7. Verfahren gemäß dem vorhergehenden Anspruch, wobei das weitere Fahrzeug nach Empfang der angepassten Fahrmanöverinformationen die Solltrajektorie und/oder das Sollfahrmanöver oder eine an die angepassten Fahrmanöverinformationen angepasste Solltrajektorie und/oder ein angepasstes Sollfahrmanöver ausführt.

8. Verfahren gemäß wenigstens einem der vorhergehenden Ansprüche, wobei als Fahrmanöverinformationen die Art eines Fahrmanövers, die Position des Beginns des Fahrmanövers, die Zeit des Beginns des Fahrmanövers und/oder die zeitliche und/oder örtliche Länge des Fahrmanövers übertragen werden.

9. Verfahren gemäß wenigstens einem der vorhergehenden Ansprüche, wobei die Fahrmanöverinformationen eine Information zur Bestimmung befahrenen Fahrstreifens einer Fahrbahn umfassen.

10. Verfahren gemäß wenigstens einem der vorhergehenden Ansprüche, wobei im Falle einer Fahrstreifenfolgefahrt des ersten und/oder des weiteren Fahrzeugs keine Fahrmanöverinformationen ausgesandt werden.

11. Verfahren gemäß wenigstens einem der vorhergehenden Ansprüche, wobei gleiche Fahrmanöverinformationen wiederholt ausgesandt werden.

12. Verfahren gemäß wenigstens einem der vorhergehenden Ansprüche, wobei die abstrakten Fahrmanöverinformationen in wenigstens einen bereits bestehenden üblicherweise wiederholt ausgesendeten, insbesondere standardisierten, Nachrichtentyp eingebettet werden.

13. Verfahren gemäß wenigstens einem der vorhergehenden Ansprüche, wobei vorgesehen ist eine Information über einen Kooperationsstatus und/oder dessen Änderung in Form zumindest eines Statusindikators auszusenden.

14. Verfahren gemäß wenigstens einem der vorhergehenden Ansprüche, wobei im Falle eines Konflikts der Solltrajektorie und/oder des Sollfahrmanövers des ersten Fahrzeugs und der Solltrajektorie und/oder des Sollfahrmanövers des weiteren Fahrzeugs geltende Straßenverkehrsregeln für eine Auflösung des Konflikts zugrunde gelegt werden.

15. Vorrichtung in einem ersten Fahrzeug zur dezentralen Kooperationsabstimmung mit mindestens einem weiteren Fahrzeug, umfassend:
- eine Manöverplanungseinrichtung zum Ermitteln zumindest eines abstrakten Fahrmanövers zur Realisierung zumindest eines Sollfahrmanövers, wobei die Manöverplanungseinrichtung weiterhin zum Ermitteln von Fahrmanöverinformationen bezüglich des zumindest einen abstrakten Fahrmanövers ausgestaltet ist, wobei ein abstraktes Fahrmanöver eine abstrahierte Repräsentanz zur Realisierung von zumindest einer auszuführenden Handlungsanweisung zur Beschreibung eines grundlegenden Fahrmanövers eines Fahrzeugs bezeichnet,
- eine Manöverabstimmungseinrichtung zum Übermitteln der Fahrmanöverinformationen an zumindest ein weiteres Fahrzeug über eine Fahrzeug-zu-X Schnittstelle, wobei die Manöverabstimmungseinrichtung ausgestaltet ist, Fahrmanöverinformationen des weiteren Fahrzeugs mittels der Fahrzeug-zu-X Schnittstelle zu empfangen und eine Solltrajektorie und/oder ein Sollfahrmanöver des weiteren Fahrzeugs auf Basis der empfangenen Fahrmanöverinformationen zu rekonstruieren und die rekonstruierte Solltrajektorie und/oder das rekonstruierte Sollfahrmanöver des weiteren Fahrzeugs mit einer Solltrajektorie und/oder einem Sollfahrmanöver des ersten Fahrzeugs zu vergleichen und, sofern eine Konflikt der Solltrajektorie und/oder des Sollfahrmanövers des ersten Fahrzeugs und der Solltrajektorie und/oder des Sollfahrmanövers des weiteren Fahrzeugs vorliegt, eine Kooperationsanfrage und/oder eine den Konflikt anzeigende Information an das erste Fahrzeug zu übermitteln, **dadurch gekennzeichnet, dass** die Manöverplanungseinrichtung weiter konfiguriert ist, um zur Ermittlung des zumindest einen abstrakten Fahrmanövers eine Auswahl zumindest eines abstrakten Fahrmanövers aus einer Aufstellung unterschiedlicher abstrakter Fahrmanöver aus einem Datenspeicher vorzunehmen, und aus der Auswahl der Fahrmanöver eine Abfolge in der Reihenfolge der Ausführung zu erstellen, wobei die Manöverabstimmungseinrichtung weiter konfiguriert ist, um eine zusammengefasste Aufstellung von Fahrmanöverinformationen einer Mehrzahl auszuführender Fahrmanöver von dem ersten Fahrzeug an das weitere Fahrzeug zu übermitteln.

## Claims

1. Method for decentralized coordination of cooperation between at least two vehicles, comprising the steps carried out by a device in a first vehicle:
- determining at least one abstract driving manoeuvre for implementing at least one target driving manoeuvre by the first vehicle, wherein an abstract driving manoeuvre denotes an abstracted representation for implementing at least one action instruction, to be carried out, for the description of an underlying driving manoeuvre of a vehicle,
- determining driving manoeuvre information relating to the at least one abstract driving manoeuvre by the first vehicle,
- transferring the driving manoeuvre information to at least one further vehicle by means of a vehicle-to-X interface of the first vehicle,
- receiving the driving manoeuvre information of the first vehicle by means of a vehicle-to-X interface of the further vehicle,
- reconstructing a target trajectory and/or a target driving manoeuvre of the first vehicle on the basis of the received driving manoeuvre information by the further vehicle,
- comparing the reconstructed target trajectory and/or the reconstructed target driving manoeuvre of the first vehicle with a target trajectory and/or a target driving manoeuvre of the further vehicle and, if there is a conflict between the target trajectory and/or the target driving manoeuvre of the first vehicle and the target trajectory and/or the target driving manoeuvre of the further vehicle,
- transferring a cooperation request and/or information indicating the conflict to the first vehicle,
**characterized in that**, in order to determine the at least one abstract driving manoeuvre, a selection is made of at least one abstract driving manoeuvre from a listing of different abstract driving manoeuvres from a data memory, wherein a sequence in respect of the order of execution is produced from the selection of the driving manoeuvres, wherein a compiled listing of driving manoeuvre information of a plurality of driving manoeuvres to be carried out is transferred from the first vehicle to the further vehicle.

2. Method according to Claim 1, wherein, in order to determine the driving manoeuvre information, the at least one determined driving manoeuvre is concretized with respect to the particular situation.

3. Method according to at least one of the preceding claims, wherein, before at least one abstract driving manoeuvre is determined for implementing at least one target driving manoeuvre, the first vehicle determines a target trajectory of the first vehicle.

4. Method according to at least one of the preceding claims, wherein the first vehicle and/or the further vehicle perform/performs calculations relating to at least one possible adaptation function of the target trajectory and/or of the target driving manoeuvre if there is a conflict between the target trajectory and/or the target driving manoeuvre of the first vehicle and the target trajectory and/or the target driving manoeuvre of the further vehicle.

5. Method according to at least one of the preceding claims, wherein the first vehicle which receives the cooperation request and/or information indicating the conflict carries out testing to determine whether cooperation with the further vehicle is to be supported.

6. Method according to the preceding claim, wherein the first vehicle transfers adapted driving manoeuvre information on the basis of a determination of at least one abstract driving manoeuvre for implementing at least one adapted target driving manoeuvre if cooperation with the further vehicle is to be supported.

7. Method according to the preceding claim, wherein, after the reception of the adapted driving manoeuvre information, the further vehicle executes the target trajectory and/or the target driving manoeuvre or a target trajectory which is adapted to the adapted driving manoeuvre information and/or an adapted target driving manoeuvre.

8. Method according to at least one of the preceding claims, wherein the type of driving manoeuvre, the position of the start of the driving manoeuvre, the time of the start of the driving manoeuvre and/or the chronological and/or spatial length of the driving manoeuvre are transmitted as driving manoeuvre information.

9. Method according to at least one of the preceding claims, wherein the driving manoeuvre information comprises information relating to the determination of a lane which is being travelled on on a carriageway.

10. Method according to at least one of the preceding claims, wherein, in the case of follow-on travel on a lane by the first and/or the further vehicle, no driving manoeuvre information is emitted.

11. Method according to at least one of the preceding claims, wherein identical driving manoeuvre information is emitted repeatedly.

12. Method according to at least one of the preceding claims, wherein the abstract driving manoeuvre information is embedded in at least one, in particular standardized, message type which already exists and is usually emitted repeatedly.

13. Method according to at least one of the preceding claims, wherein there is provision for information about a cooperation status and/or the change therein to be emitted in the form of at least one status indicator.

14. Method according to at least one of the preceding claims, wherein, in the case of a conflict between the target trajectory and/or the target driving manoeuvre of the first vehicle and the target trajectory and/or the target driving manoeuvre of the further vehicle, applicable road traffic regulations are used as the basis for a resolution of the conflict.

15. Device in a first vehicle for decentralized coordination of cooperation with at least one further vehicle, comprising:
- a manoeuvre planning device for determining at least one abstract driving manoeuvre for implementing at least one target driving manoeuvre, wherein the manoeuvre planning device is also configured to determine driving manoeuvre information relating to the at least one abstract driving manoeuvre, wherein an abstract driving manoeuvre denotes an abstract representation for implementing at least one action instruction, to be carried out, for the description of an underlying driving manoeuvre of a vehicle,
- a manoeuvre coordinating device for transferring the driving manoeuvre information to at least one further vehicle via a vehicle-to-X interface, wherein the manoeuvre coordinating device is configured to receive driving manoeuvre information of the further vehicle by means of the vehicle-to-X interface and to reconstruct a target trajectory and/or a target driving manoeuvre of the further vehicle on the basis of the received driving manoeuvre information and to compare the reconstructed target trajectory and/or the reconstructed target driving manoeuvre of the further vehicle with a target trajectory and/or a target driving manoeuvre of the first vehicle, and, if there is a conflict between the target trajectory and/or the target driving manoeuvre of the first vehicle and the target trajectory and/or the target driving manoeuvre of the further vehicle, to transfer information indicating a cooperation request and/or the conflict to the first vehicle, **characterized in that**, in order to determine the at least one abstract driving manoeuvre, the manoeuvre planning device is also configured to make a selection of at least one abstract driving manoeuvre from a listing of different abstract driving manoeuvres from a data memory, and to produce a sequence in respect of the order of execution from the selection of the driving manoeuvres, wherein the manoeuvre coordinating device is also configured to transfer a complied listing of driving manoeuvre information of a plurality of driving manoeuvres to be carried out from the first vehicle to the further vehicle.

## Revendications

1. Procédé de coopération coordonnée décentralisée entre au moins deux véhicules, le procédé comprenant les étapes suivantes réalisées par un dispositif d'un premier véhicule :
- déterminer au moins une manœuvre de conduite abstraite pour réaliser au moins une manœuvre de conduite cible par le biais du premier véhicule, une manœuvre de conduite abstraite désignant une représentation abstraite de la réalisation d'au moins une instruction d'action à réaliser pour décrire une manœuvre de conduite de base d'un véhicule,
- déterminer des informations de manœuvre de conduite concernant l'au moins une manœuvre de conduite abstraite du premier véhicule,
- transmettre les informations de manœuvre de conduite à au moins un autre véhicule à l'aide d'une interface véhicule-X du premier véhicule,
- recevoir les informations de manœuvre de conduite du premier véhicule à l'aide d'une interface véhicule-X de l'autre véhicule,
- reconstruire une trajectoire cible et/ou une manœuvre de conduite cible du premier véhicule sur la base des informations de manœuvre de conduite reçues par le biais de l'autre véhicule,
- comparer la trajectoire cible reconstruite et/ou la manœuvre de conduite cible reconstruite du premier véhicule à une trajectoire cible et/ou une manœuvre de conduite cible de l'autre véhicule et, en cas de conflit entre la trajectoire cible et/ou la manœuvre de conduite cible du premier véhicule et la trajectoire cible et/ou la manœuvre de conduite cible de l'autre véhicule,
- transmettre une demande de coopération et/ou d'une information indiquant le conflit au premier véhicule, **caractérisé en ce que**, pour déterminer l'au moins une manœuvre de conduite abstraite, une sélection d'au moins une manœuvre de conduite abstraite est effectuée parmi une liste de différentes manœuvres de conduite abstraites provenant d'une mémoire de données, une séquence dans l'ordre d'exécution étant créée à partir de la sélection des manœuvres de conduite, une liste résumée d'informations de manœuvre de conduite d'une pluralité de manœuvres de conduite à effectuer étant transmise du premier véhicule à l'autre véhicule.

2. Procédé selon la revendication 1, une concrétisation de l'au moins une manœuvre de conduite déterminée est effectuée par rapport à la situation respective pour déterminer les informations de manœuvre de conduite.

3. Procédé selon l'une au moins des revendications précédentes, une détermination d'une trajectoire cible du premier véhicule est effectuée par le premier véhicule avant de déterminer au moins une manœuvre de conduite abstraite pour réaliser au moins une manœuvre de conduite cible.

4. Procédé selon l'une au moins des revendications précédentes, le premier véhicule et/ou l'autre véhicule effectue des calculs concernant au moins une option d'adaptation possible de la trajectoire cible et/ou de la manœuvre de conduite cible en cas de conflit entre la trajectoire cible et/ou la manœuvre de conduite cible du premier véhicule et la trajectoire cible et/ou la manœuvre de conduite cible de l'autre véhicule.

5. Procédé selon l'une au moins des revendications précédentes, le premier véhicule qui reçoit la demande de coopération et/ou l'information indiquant le conflit effectuant une vérification pour déterminer si une coopération avec l'autre véhicule doit être prise en charge.

6. Procédé selon la revendication précédente, le premier véhicule transmettant des informations de manœuvre de conduite adaptées sur la base d'une détermination d'au moins une manœuvre de conduite abstraite pour la réalisation d'au moins une manœuvre de conduite cible adaptée si la coopération avec l'autre véhicule doit être prise en charge.

7. Procédé selon la revendication précédente, l'autre véhicule exécutant, après réception des informations de manœuvre de conduite adaptées, la trajectoire cible et/ou la manœuvre de conduite cible ou une trajectoire cible adaptée aux informations de manœuvre de conduite adaptées et/ou une manœuvre de conduite cible adaptée.

8. Procédé selon l'une au moins des revendications précédentes, le type de manœuvre de conduite, la position de début de la manœuvre de conduite, l'instant du début de la manœuvre de conduite et/ou la durée et/ou longueur de la manœuvre de conduite étant transmis en tant qu'informations de manœuvre de conduite.

9. Procédé selon l'une au moins des revendications précédentes, les informations de manœuvre de conduite comprenant une information destinée à déterminer les voies de circulation parcourues d'une route.

10. Procédé selon l'une au moins des revendications précédentes, aucune information de manœuvre de conduite n'est émise dans le cas où le premier et/ou le deuxième véhicule empruntent une succession de voie de circulation.

11. Procédé selon l'une au moins des revendications précédentes, les mêmes informations de manœuvre de conduite étant envoyées à plusieurs reprises.

12. Procédé selon l'une au moins des revendications précédentes, les informations de manœuvre de conduite abstraites étant intégrées dans au moins un type de message déjà existant, en particulier normalisé, qui est généralement envoyé à plusieurs reprises.

13. Procédé selon l'une au moins des revendications précédentes, l'émission d'une information sur un état de coopération et/ou son changement étant prévue sous la forme d'au moins un indicateur d'état.

14. Procédé selon l'une au moins des revendications précédentes, en cas de conflit entre la trajectoire cible et/ou la manœuvre de conduite cible du premier véhicule et la trajectoire cible et/ou la manœuvre de conduite cible de l'autre véhicule, des règles de circulation routière valides étant utilisées pour résoudre le conflit.

15. Dispositif d'un premier véhicule destiné à la coopération coordonnée décentralisée avec au moins un autre véhicule, ledit dispositif comprenant :
- un moyen de planification de manœuvre destiné à déterminer au moins une manœuvre de conduite abstraite pour réaliser au moins une manœuvre de conduite cible, le moyen de planification de manœuvre étant en outre conçu pour déterminer des informations de manœuvre de conduite concernant l'au moins une manœuvre de conduite abstraite,
une manœuvre de conduite abstraite désignant une représentation abstraite de la réalisation d'au moins une instruction d'action à exécuter pour décrire une manœuvre de conduite de base d'un véhicule,
- un moyen de coordination de manœuvre destiné à transmettre les informations de manœuvre de conduite à au moins un autre véhicule par le biais d'une interface véhicule-X, le moyen de coordination de manœuvre étant conçu pour recevoir des informations de manœuvre de conduite de l'autre véhicule à l'aide de l'interface véhicule-X et pour reconstruire une trajectoire cible et/ou une manœuvre de conduite cible de l'autre véhicule sur la base des informations de manœuvre de conduite reçues et pour comparer la trajectoire cible reconstruite et/ou la manœuvre de conduite cible reconstruite de l'autre véhicule à une trajectoire cible et/ou une manœuvre de conduite cible du premier véhicule et pour transmettre, en cas de conflit entre la trajectoire cible et/ou la manœuvre de conduite cible du premier véhicule et la trajectoire cible et/ou la manœuvre de conduite cible de l'autre véhicule, une demande de coopération et/ou une information indiquant le conflit au premier véhicule,
**caractérisé en ce que** le moyen de planification de manœuvre est en outre conçu pour effectuer une sélection d'au moins une manœuvre de conduite abstraite dans une liste de manœuvres de conduite abstraites différentes d'une mémoire de données afin de déterminer l'au moins une manœuvre de conduite abstraite, et pour créer à partir de la sélection de la manœuvre de conduite une séquence dans l'ordre d'exécution, le moyen de coordination de manœuvre étant en outre conçu pour transmettre une liste résumée d'informations de manœuvre de conduite d'une pluralité de manœuvres de conduite à effectuer du premier véhicule à l'autre véhicule.
